# EUROPEAN PATENT APPLICATION

(11) **EP 4 686 124 A2**
(43) Date of publication of application: **28.01.2026**
(21) Application number: 25222662.6
(22) Date of filing: 08.04.2021
(51) Int. Cl.: H04L 1/1829

(54) **METHODS AND APPARATUS FOR DOWNLINK SMALL DATA RECEPTION**

(30) Priority: 08.04.2020 US 202063007027 P; 20.10.2020 US 202063093977 P
(62) Divisional of application: 21723474.9
(71) Applicant: InterDigital Patent Holdings, Inc., Wilmington, DE 19809 (US)
(72) Inventor: ALFARHAN, Faris, Québec, H3A 3G4 (CA); PELLETIER, Ghyslain, Québec, H3A 3G4 (CA); WATTS, Dylan, Québec, H3A 3G4 (CA); MARINIER, Paul, Québec, H3A 3G4 (CA); CANONNE-VELASQUEZ, Loic, Québec, H3A 3G4 (CA)
(74) Representative: AWA Sweden AB

(57) **Abstract**

Methods and apparatus for downlink small data reception in wireless communications are provided. In an example, a method includes receiving configuration information for small data transmission (SDT), and the configuration information indicates one or more uplink (UL) configured grants (CGs), one or more downlink (DL) CGs, and a Transport Block Size (TBS) threshold for SDT; receiving a DL data transmission using a DL CG of the one or more DL CGs; determining a TBS, a HARQ feedback, and a Data Radio Bearer (DRB) associated with the received DL data transmission; and transmitting, using an UL CG of the one or more UL CGs, the HARQ feedback associated with the received DL data transmission, based on a determination that the TBS associated with the received DL data transmission is less than the TBS threshold and/or the DRB associated with the received DL data transmission supports SDT.

## Description

### CROSS-REFERENCE TO RELATED APPLICATIONS

This application claims priority to and the benefit of U.S. Provisional Application No. 63/007,027 filed in the U.S. Patent and Trademark Office on April 08, 2020 and U.S. Provisional Application No. 63/093,977 filed in the U.S. Patent and Trademark Office on October 20, 2020, the entire contents of each of which being incorporated herein by reference as if fully set forth below in their entirety and for all applicable purposes.

### BACKGROUND

Small and/or infrequent data transmission can cause a drain on power consumption. For example, transitioning from an inactive mode to a connected mode to send a small amount of data can create increased signaling overhead in a network and can also cause increased battery consumption. For devices supporting enhanced Mobile Broadband (eMBB) services, applications can have frequent background small data (e.g., app refresh data, notifications, etc.), which may be periodic or aperiodic. Further, sensors and internet of things (loT) devices may have considerable amount of signaling and small data (e.g., periodic heartbeat or stay-alive signals, surveillance updates, periodic video stream, non-periodic video based on motion sensing, etc.). Requiring a wireless transmit/receive unit (WTRU) to transition or switch to a connected mode for such small data or signaling can power consumption considerably, especially for power or battery limited sensor/loT devices or for eMBB mobile devices aiming to reduce battery consumption.

### SUMMARY

Methods, systems, apparatus, and techniques are disclosed for downlink small data transmission and/or reception in wireless communications are provided. In an example, a method (e.g., implemented by a WTRU) for wireless communications includes receiving configuration information for small data transmission (SDT), and the configuration information indicates one or more uplink (UL) configured grants (CGs), one or more downlink (DL) CGs, and a Transport Block Size (TBS) threshold for SDT. The method includes receiving a DL data transmission using a DL CG of the one or more DL CGs. The method also includes determining a TBS, a HARQ feedback, and a Data Radio Bearer (DRB) associated with the received DL data transmission. The method further includes transmitting, using an UL CG of the one or more UL CGs, the HARQ feedback associated with the received DL data transmission, based on a determination that the TBS associated with the received DL data transmission is less than the TBS threshold and/or the DRB associated with the received DL data transmission supports SDT.

In another example, a method (e.g., implemented by a WTRU) for wireless communications includes monitoring a physical downlink control channel (PDCCH) for reception of one of a DL assignment and a control signaling after an UL SDT. The method includes triggering a DL small data transfer procedure upon receiving a trigger signal, and monitoring a subset of the one or more DL CGs for DL assignments based on any of: a Reference Signal Received Power (RSRP), the TBS, or an UL time alignment. The method also includes initiating a random access (RA) to transition into a connected mode based on any of: a subsequent DL data reception, a small data reception comprising a negative acknowledgement (NACK), or the TBS being greater than or equal to the TBS threshold. The method further includes initiating a PDCCH monitoring timer for retransmission after at least a small data reception comprising a NACK.

### BRIEF DESCRIPTION OF THE DRAWINGS

A more detailed understanding may be had from the detailed description below, given by way of example in conjunction with the drawings appended hereto. Figures in such drawings, like the detailed description, are examples. As such, the Figures and the detailed description are not to be considered limiting, and other equally effective examples are possible and likely. Furthermore, like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment; and
FIG. 2 is a flowchart illustrating an exemplary procedure of downlink small data reception, according to one or more embodiments.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

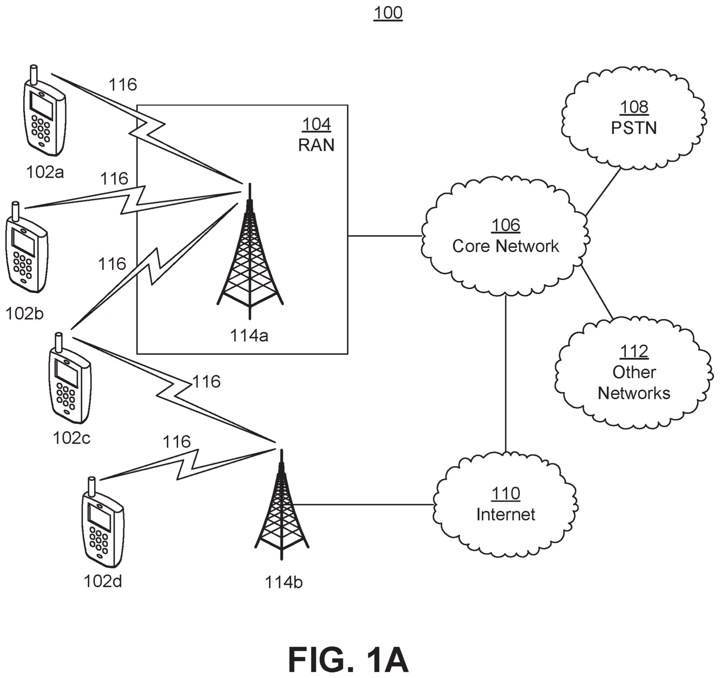

The methods, apparatuses and systems provided herein are well-suited for communications involving both wired and wireless networks. Wired networks are well-known. An overview of various types of wireless devices and infrastructure is provided with respect to Figures 1A-1D, where various elements of the network may utilize, perform, be arranged in accordance with and/or be adapted and/or configured for the methods, apparatuses and systems provided herein.

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

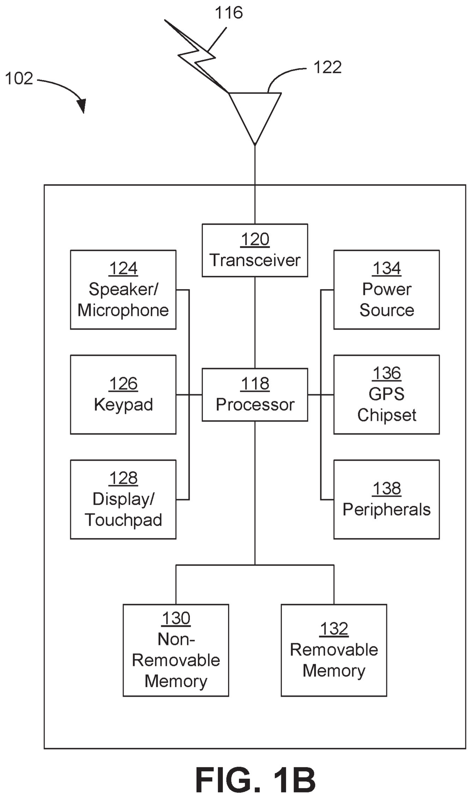

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor, and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

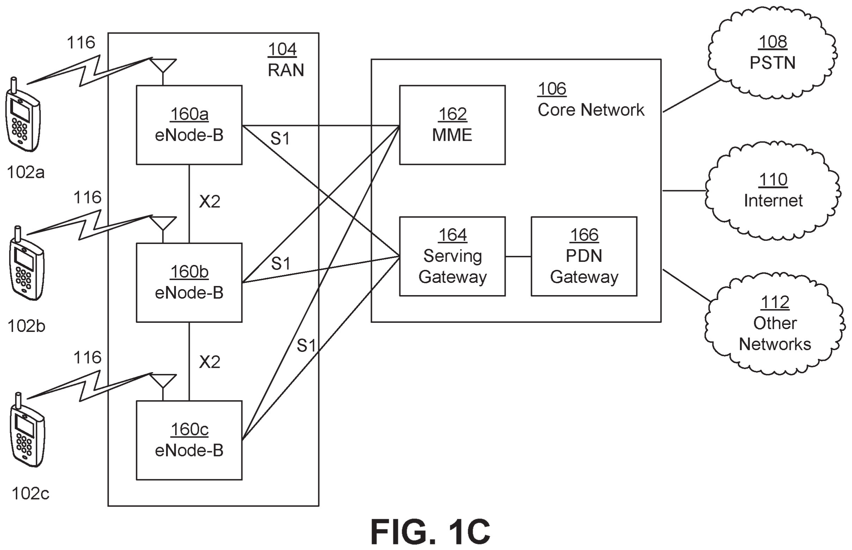

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily, or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

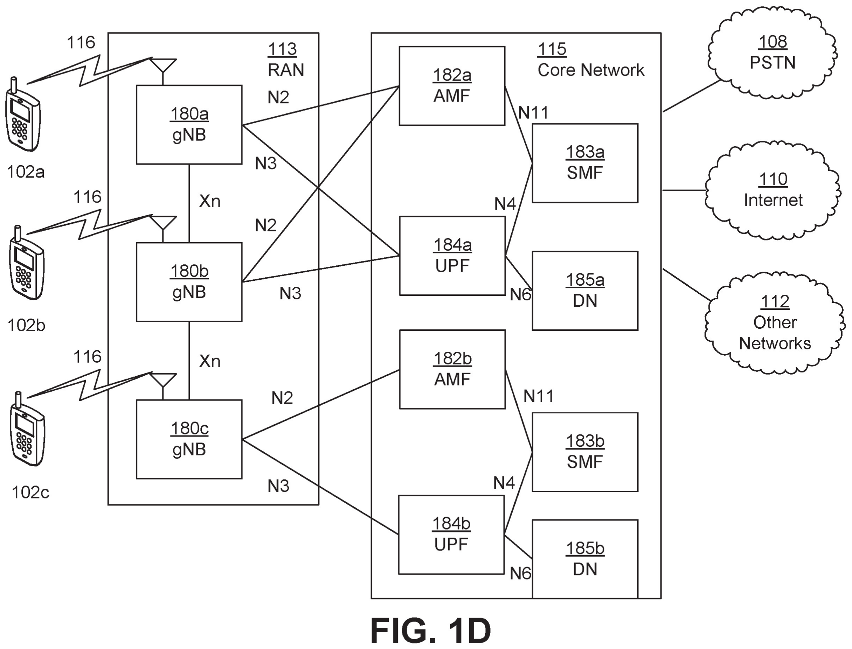

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Small and/or infrequent data transmission can cause a drain on power consumption. For example, transitioning from an inactive mode to a connected mode to send a small amount of data can create increased signaling overhead in a network and can also cause increased battery consumption. For devices supporting enhanced Mobile Broadband (eMBB) services, applications can have frequent background small data (e.g., app refresh data, notifications, etc.), which may be periodic or aperiodic. Further, sensors and internet of things (IoT) devices may have considerable amount of signaling and small data (e.g., periodic heartbeat or stay-alive signals, surveillance updates, periodic video stream, non-periodic video based on motion sensing, etc). Requiring a wireless transmit/receive unit (WTRU) to transition or switch to a connected mode for such small data or signaling can power consumption considerably, especially for power or battery limited sensor/loT devices or for eMBB mobile devices aiming to reduce battery consumption.

Two-step random access (RA) and configured grants (CGs) in NR, UL and/or DL small data transmissions may be enabled without transitioning to a connected mode.

Embodiments for data transmission without WTRU initiated state transitions for both UL and DL are provided. For example, a state may be set as "No new Radio Resource Control (RRC) state should be introduced in this WID. Transmission of small data in UL, subsequent transmission of small data in UL and DL and the state transition decisions should be under network control". One or more embodiments may include using 2-step RA, 4-step RA, and/or configured grant (CG) in Inactive state/mode.

A WTRU context in RRC_INACTIVE may include the configuration of radio bearers, logical channels, and security information. The WTRU may keep all or a part of its context in Inactive and/or idle mode. Some Data Radio Bearers (DRBs) may be suspended in inactive or idle mode.

As applied herein, an inactive (or INACTIVE) state may be interchangeable with an inactive (or INACTIVE) mode and/or "INACTIVE" in one or more embodiments.

As applied herein, an idle (or IDLE) state may be interchangeable with an idle (or IDLE) mode and/or "IDLE" in one or more embodiments.

As applied herein, a connected (or CONNECTED) state may be interchangeable with a connected (or CONNECTED) mode and/or "CONNECTED" in one or more embodiments.

As applied herein, a channel state information (CSI) may include at least one of the following: channel quality index (CQI), rank indicator (RI), precoding matrix index (PMI), an L1 channel measurement (e.g., Reference Signal Received Power (RSRP) such as L1-RSRP, or SINR), CSI-RS resource indicator (CRI), SS/PBCH block resource indicator (SSBRI), layer indicator (LI) and/or any other measurement quantity measured by the WTRU from the configured CSI-RS or SS/PBCH block.

As applied herein, an uplink control information (UCI) may include CSI, Hybrid Automatic Repeat Request (HARQ) feedback for one or more HARQ processes, Scheduling request (SR), Link recovery request (LRR), CG-UCI and/or other control information bits that may be transmitted on the PUCCH or PUSCH.

As applied herein, channel conditions may include any conditions relating to the state of the radio/channel, which may be determined by the WTRU from: a WTRU measurement (e.g., L1/SINR/RSRP, CQI/Modulation and Coding Scheme (MCS), channel occupancy, RSSI, power headroom, exposure headroom), L3/mobility-based measurements (e.g., RSRP, RSRQ), an Radio Link Monitoring (RLM) state, and/or channel availability in unlicensed spectrum (e.g., whether the channel is occupied based on determination of an LBT procedure or whether the channel is deemed to have experienced a consistent LBT failure).

As applied herein, a physical random-access channel (PRACH) resource may include a PRACH resource (e.g., in frequency) a PRACH occasion (RO) (e.g., in time), a preamble format (e.g., in terms of total preamble duration, sequence length, guard time duration and/or in terms of length of cyclic prefix) and/or a certain preamble sequence used for the transmission of a preamble in a random access (RA) procedure.

As applied herein, small data may include UL-SCH data (e.g., non-CCCH) transmitted by a WTRU in a non-connected mode, including, for example, IDLE and/or INACTIVE modes.

As applied herein, a MsgA may include a preamble and payload transmissions on PRACH and physical uplink shared channel (PUSCH) resources respectively in a 2-step RA procedure.

As applied herein, a MsgB may include a downlink response to MsgA, which can be a success Random Access Response (RAR), fallback RAR, or a back-off indication.

As applied herein, a property of scheduling information (e.g., an uplink grant or a downlink assignment) may include of at least one of the following: A frequency allocation; An aspect of time allocation, such as a duration; A priority; A modulation and coding scheme; A transport block size; A number of spatial layers; A number of transport blocks to be carried; A TCI state or SRI; A number of repetitions; and/or Whether the grant is a configured grant type 1, type 2 or a dynamic grant.

An indication by DCI may include at least one of the following: An explicit indication by a DCI field or by Radio Network Identifier (RNTI) used to mask CRC of the Physical Downlink Control Channel (PDCCH); and/or An implicit indication by a property such as DCI format, DCI size, Coreset or search space, aggregation level, identity of first control channel resource (e.g., index of first CCE) for a DCI, where the mapping between the property and the value may be signaled by RRC or MAC.

Small downlink data transfers and related aspects are disclosed herein. A transition of a control plane connectivity state from either an IDLE more or the inactive mode to a connected mode to send or receive a small amount of user plane data for a dedicated radio bearer (a DRB, or an SRB) may lead to increased signaling overhead in the network and increased battery consumption for the WTRU.

It would be beneficial for a WTRU to be able to receive variable amounts of small data in the downlink direction transitioning into a different connectivity state or into a different power usage/power saving mode.

In 3GPP, reception of downlink of user plane data for a dedicated radio bearer (e.g., DRB, SRB) while not in the RRC connected more may not be supported. Accordingly, techniques to support downlink data reception in idle or inactive modes are thus desirable to enable downlink transmission of small amount of unicast data.

In various embodiments, DL scheduling for small data transmissions may be implemented. WTRU-triggered DL small data scheduling may be implemented such that DL small data may be transmitted by a gNB in response to UL small data and/or control signaling transmitted by the WTRU in a RA procedure, and visa-versa. Such a process may be implemented for an Inactive or Idle mode, as disclosed herein.

During PDCCH/ Physical Downlink Shared Channel (PDSCH) resource monitoring, the WTRU may optionally exchange both UL and DL small data, only UL small Data, or only DL small data during a small data transfer procedure. The procedure may or may not involve a preamble transmission. The WTRU may also anticipate reception DL small data or control signaling in response to transmitted UL small data. The WTRU may monitor PDCCH with specific properties as a function of prior UL small data transmission, and/or as a function of PRACH/PUSCH resource used or the UL small data PDU contents.

In one embodiment, the WTRU may monitor PDCCH after UL small data transmission on a given resource (e.g., coreset, aggregation level, one or more first index of control channel element for DCI decoding, and/or search space), given RNTI (e.g., I-RNTI, C-RNTI, RA/MsgB-RNTI, a small data-RNTI computed by a formula as a function of the selected PRACH resource, a small-data RNTI computed by a formula as a function of the selected PUSCH resource for UL small data transmission) for reception of a DL assignment (e.g., one relating to the transmitted UL data), reception of downlink control signaling (e.g., relating to the transmitted UL data), and/or scheduling of the RAR/MsgB. This monitoring may be in addition to the legacy PDCCH monitoring for reception of RAR/MsgB in response to Msg1/MsgA transmission.

In one embodiment, the WTRU may monitor PDCCH on a specific configured coreset search space, using a specific aggregation level, for one or more first index of control channel elements for DCI decoding and/or scrambled by a small data-RNTI after data transmission in MsgA ,or Msg3, for downlink data reception in addition to monitoring for MsgB, or Msg4. This process can be helpful for the network to separate legacy WTRUs from WTRUs capable of small data transfer. A specific aggregation level may a property of the DCI and may be a number of CCE's used for sending a control information. Its values maybe be, for example, 1,2,4 and 8. Each coreset may be configured with 1 or more aggregation levels. The small data-RNTI may be the WTRU identity if it was included in MsgA/Msg3, or an RNTI computed as a function of the selected PRACH and/or PUSCH time and/or resource used to transmit associated uplink small data.

According to another embodiment, a WTRU may monitor PDCCH with specific properties as a function of used PRACH resources or QoS of transmitted UL data. A WTRU may be configured with preamble groups to indicate, the TB size of the desired UL small data to be transmitted, and/or whether the UL small data is associated DL small data (e.g., for which the WTRU monitors PDCCH with the configured specific resource and/or small data-RNTI). The WTRU may monitor PDCCH on a specific configured coreset, search space, and/or a small data-RNTI after data transmission in MsgA, or Msg3, for downlink data reception, if the selected preamble and/or the selected PUSCH resource is from a certain configured group, if the UL TB size is larger than a threshold or within a certain range, if UL data from a certain LCH/LCG/DRB/QoS flow was transmitted (e.g., on MsgA or Msg3), and/or if anticipated DL data size is larger than a certain threshold. For example, the WTRU may be configured with an association between UL small data TB size and an anticipated DL small data TB, and/or a mapping or association between uplink and downlink LCHs/DRBs/QoS flows (e.g., ones applicable for small data).

According to another embodiment, a WTRU may monitor PDCCH for DL assignments for a specific PDSCH resource if it transmitted UL small data on an associated PUSCH resource or uplink bearer. A WTRU may monitor PDCCH signaling on a specific PDCC resource or a specific RNTI (e.g., CS-RNTI or the small data-RNTI) or for a downlink assignment or monitor for DL assignments on certain DL resource (e.g., PDSCH resource, SPS) after transmitting UL small data on an associated UL CG or PUSCH resource, transmitting UL small data on an associated PUSCH resource in RA, transmitting UL small data from an associated LCH/DRB/QoS flow, transmitting control signaling (e.g., UCI, UCI on PUSCH, or control signaling in the RA procedure) that may be associated, and/or transmitting a preamble from a certain/associated configured preamble group.

In one embodiment, WTRU triggered DL small data scheduling may be based on subsequent data reception. A WTRU may receive a response type (e.g., an indication in msgB, msg2, msg4, or part of paging message/signaling), which may indicate further subsequent DL data in an Inactive state. Upon reception of such subsequent data indication, the WTRU may monitor for one or more of, for example, additional PDCCH signaling, a downlink assignment on, for example, PDSCH or SPS. The response type may contain additional information regarding the specific resources to monitor, and/or the duration of monitoring e.g., subject to the duration of a timer or within a window.

In one embodiment, WTRU triggered DL small data scheduling may be based on WTRU state/mode transitions. Upon reception of a subsequent data indication, a WTRU may initiate an RA to go into a connected mode. The WTRU may initiate the RA to transition into connected mode as a function of the DL small data received, DL small data Transport Block Size (TBS), receiving data from a specific LCH/DRB/QoS flow, and/or if remaining TBs are anticipated. The WTRU may transition into connected mode upon reception of DL small data on a given PDCCH or PDSCH resource.

Network initiated DL small data scheduling with preamble transmission is disclosed, In one embodiment. DL small data may be initiated by applications without prior related UL small data transmissions. The network may initiate the DL small data transmission. A triggered small data reception based technique may be implemented when a WTRU triggers a DL small data transfer procedure (e.g., RA for small data) upon reception of a trigger signal from the gNB. The trigger may convey (or be associated with) a PRACH resource, a PDSCH resource, or an RA type.

An NW may trigger the WTRU to initiate an RA procedure to receive DL small data in inactive or idle mode. This process can be useful when the UL timing is not known and, thus, the preamble may provide a way for the gNB to provide/update the WTRU's TA during the RA procedure. When the WTRU is known, the WTRU may use the trigger signal to monitor for a DL assignment on a downlink configured grant and the methods described herein are also applicable for small data reception on a DL CG.

The WTRU may be configured to monitor certain PDCCH resources (e.g., on coresets, search spaces -common or UE specific-, and/or RNTI) to receive a trigger signal from the network. The WTRU may be configured by broadcast or semi-static signaling with these PDCCH resources, associated parameters, and/or PDCCH monitoring patterns to monitor for reception of the trigger signal. The WTRU may be configured with a monitoring pattern and the associated PDCCH, as disclosed, and may receive a trigger signal prior to the initiation of an RA. The trigger signal may be associated with a subset of PRACH resources, or PDSCH resources, by configuration or may indicate a certain subset of those resources. The trigger signal may indicate the initiation of the RA on a specific PRACH resource (e.g., an associated PRACH resource can be configured and considered applicable upon reception of the trigger signal).

After receiving such trigger, the WTRU may initiate a CBRA or a CFRA procedure to transmit and/or receive UL and/or DL small data. The WTRU may be configured by broadcast or semi-static signaling with PRACH resources on which the WTRU initiates an RA after receiving the RA trigger. The WTRU may alternatively use any random-access channel (RACH) resource in RACH common configurations provided by broadcast signaling. Further, the WTRU may or may not keep CFRA configurations upon going into inactive mode. The WTRU may use CBRA if CFRA configurations are not available.

The WTRU may determine the type or random access procedure (e.g., 2-step or 4-step) or the parameters of a random access procedure (e.g., RAR and contention resolution timers, power ramping, or back off value and the like) based on the reception or lack thereof of a trigger signal or from an indication part of the trigger signal.

The PRACH preamble transmission trigger may be an implicit or explicit indication. An implicit trigger may be one where a WTRU receives a transmission from the network it may expect an upcoming DL small data exchange and shall thus initiate RA. An implicit trigger can be determined from receiving a DL signal on a given DL resource (e.g., reception of PDCCH on a certain coreset or search space, reception of SSB or CSI-RS on a given CSI-RS resource set, MIB/SIB, etc.). The WTRU may consider RACH resources or PDSCH resources within a configured period from the reception of the trigger signal as valid for the purpose of small data exchange.

A trigger signal may further indicate one of the contents implicitly or explicitly. Such contents may include a purpose of the small data exchange/RA (e.g., mobility/handover, beam re-alignment, beam failure recover, exchange of RRC messages of RRC reestablishment, a priority, service/LCH(s)/vertical) or an applicability indication to one or more WTRUs (e.g., a group or subset of WTRUs, WTRUs capable of small data). For example, the applicability indication can be a unique ID to indicate a subset of WTRUs (e.g., a small data-RNTI, an RNTI that corresponds to the identity of a single WTRU (C-RNTI or I-RNTI)). The contents may include the RA type or random-access procedure (e.g., 2-step or 4-step, regular RA, BFR-RA, handover RA) or the parameters of a random-access procedure, the PRACH or PDSCH resource(s) applicable for small data reception/exchange, Scheduled PRACH or PDSCH resources for reception of small data. Further, the contents may include applicable beam(s) or transmission/reception points (TRPs) to be used during small data exchange in the RA procedure or on the applicable DL CG. The WTRU may implicitly determine the beam/TRP/SSB/CSI-RS best suited, and further select an associated PRACH or PDSCH resource. Additionally, the contents may provide whether to transition into connected mode. A WTRU may transition into connected mode upon DL/UL small data exchange in a RA procedure triggered by the NW, or in a network-initiated RA procedure on a subset of PRACH resources (preambles and/or ROs).

The WTRU may be configured or predefined with an association and/or a rule, such that the WTRU may determine the applicable RA type, PRACH resource, and/or PDSCH resource for small data transfer from the reception of one or more trigger signals.

The WTRU may be triggered to receive DL small data on a given resource or to initiate a RA procedure to receive small data after reception of a RAN paging message, an indication part of paging PDCCH signaling, or an indication included in a paging message or a paging channel. The trigger signal and its contents may be embedded in the RAN paging message in one realization.

The WTRU may be triggered to receive DL small data on a given resource or to initiate an RA procedure to receive small data after not receiving an expected/periodic associated DL signal (e.g., a keep/stay alive signal, SSBs, DRS, CSI-RS, a heartbeat signal etc), a periodic PDU or MAC CE, and/or downlink small data. The WTRU may, thus, implicitly determine that it has been triggered to initiate a small data exchange procedure from the lack of reception of an expected or a periodic downlink signal. The WTRU may initiate an RA procedure upon not receiving an expected or periodic downlink signal/channel, downlink PDU, or downlink small data.

In various embodiments, a network-initiated DL small data without preamble transmission is disclosed. A WTRU may receive small data in inactive or idle modes using a configured grant PDSCH resource, without an associated preamble transmission.

The WTRU may be configured (e.g., by broadcasting and/or RRC signaling) based on whether small data reception is applicable on the cell for one or more configured grants in IDLE and/or inactive modes. Such configuration can be either dedicated (per Cell ID, and in HO command) or provided by broadcast system information signaling. The configuration may indicate whether or not the WTRU may use small data transfers (e.g., without switching to a connected mode) and, if so, whether or not the WTRU should use PRACH and/or transmit an accompanying preamble. In one embodiment, the WTRU may be configured with criteria for DL small data without preamble, e.g., a range of channel conditions, TA, S-measure, a CRE region, and/or L3 channel measurements.

A WTRU may be configured with one or more downlink configured grants (e.g., SPS resources) to receive DL small data in inactive or idle states. For the WTRU to successfully receive downlink assignments synchronously in inactive or idle modes, the WTRU may first determine the cell's downlink timing form broadcast and SSB signaling prior to any transfer of data. The WTRU may be configured (e.g., by broadcast or RRC signaling) based on whether small data reception is applicable on the cell for one or more downlink configured grants in IDLE and/or inactive modes.

The WTRU may monitor certain PDCCH or monitor for DL assignments on certain DL resource (e.g., PDSCH resource, SPS) as a function of the measured channel conditions (e.g., RSRP), whether the WTRU is uplink synchronized, channel occupancy, and/or the related TBS. The WTRU may have one or more CGs configured for small data reception, possibly on different carriers. The WTRU may monitor for downlink assignments on a subset of the configured/active DL CGs for small data reception if one or more of the conditions are met.

The conditions may be based on a TBS. The WTRU may be configured with a TBS range per CG. The WTRU may monitor for DL assignments on a CG if the anticipated amount of DL small data falls within the configured TBS range for the CG. For example, the WTRU may determine the anticipated packet amount of small data from a configuration of the associated DRB or QoS flow or from the UL small data that was transmitted prior to reception.

The conditions may be based on (or include) one or more measured channel conditions. The WTRU may be configured with channel condition range or threshold (e.g., RSRP, pathloss, power headroom, etc.) per CG. The WTRU may monitor for DL assignments on a configured grant for small data reception if the measured channel condition is within the configure range or less than the threshold. In one example, channel conditions range/threshold can be configured collectively per downlink carrier (e.g., for all configured grants on the same DL carrier).

The conditions may be based on TA. In one example, the WTRU can be configured per cell, or per CG, with a range of TA values for which the WTRU monitors the configured grant(s) for DL assignments idle/inactive modes. The WTRU may persist the TA value last used upon transitioning from connected mode. With such configuration, the WTRU may monitor for small data reception on some configured CGs if TA is within the applicable range. The WTRU may further determine that a CG is applicable for small data reception if the maintained TA value has not changed for a configured period of time.

The conditions may be based on one or more active downlink carriers and/or one or more active DL bandwidth parts (BWPs).

In one embodiment, a WTRU may initiate RA to transition into a connected mode for subsequent DL data reception or if small data reception was a negative ACK (NACK) and/or if TBS was greater than or equal to a threshold.

The WTRU may initiate RACH and transition into connected mode if it is not uplink time synchronized (e.g., no TA value stored/received) or if the TB was not successfully decoded (e.g., HARQ feedback determined for the received DL small data is NACK) possibly after all or a number of TB repetitions are received. The WTRU may initiate RACH and transition into connected mode if the received, or possibly successfully received, DL small data TB is larger than a configured threshold.

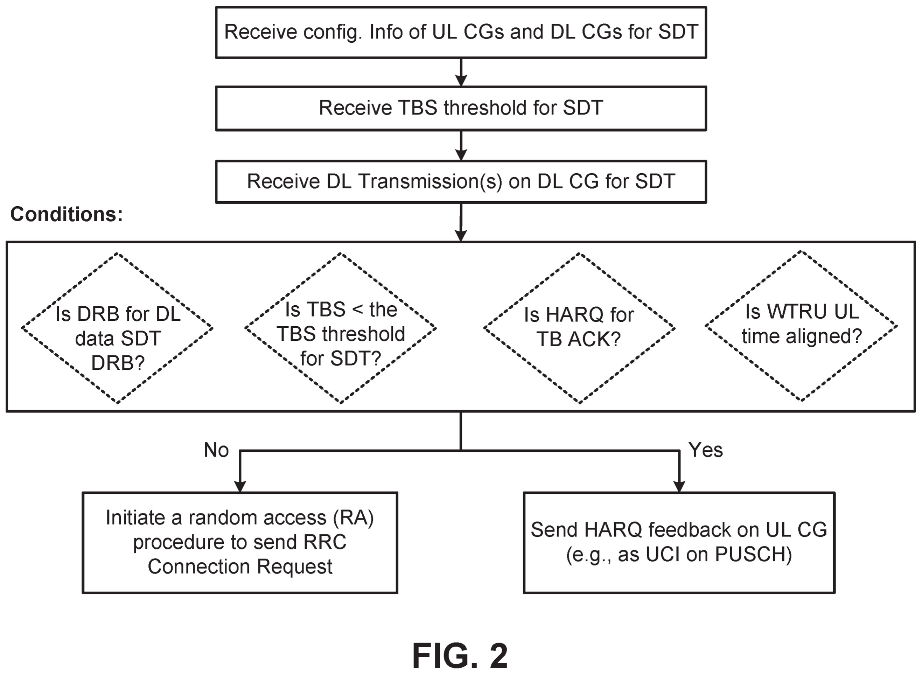

In one embodiment, referring to FIG. 2, a WTRU may receive configuration information including one or more UL CGs (e.g., for SDT), one or more DL CGs (e.g., for SDT), and/or one or more TBS thresholds (e.g., for SDT). The configuration information may be received in Inactive Mode or Connected Mode. The WTRU may operate in Inactive Mode during and/or after receiving the configuration information. In an example, the WTRU may receive DL data transmission(s) using the one or more DL CGs for SDT. The WTRU may determine, for the DL data transmission(s), a TBS, a HARQ feedback, and/or a DRB. The WTRU may determine whether to remain in Inactive mode and send HARQ feedback for the DL data transmission(s) (e.g., DL SDT) using an UL SDT resource (e.g., PUSCH resource), or to initiate random access (RA) to request an RRC connection (or RRC reconnection) based on, for example, the determined DL TBS, the determined HARQ feedback, DL DRB SDT support, and/or an UL time alignment. For example, on condition that the determined TBS is less than the TBS threshold, and/or the DRB supports SDT, the WTRU may send the HARQ feedback on the UL CG for SDT (e.g., as UCI on PUSCH). The above condition for sending HARQ feedback may further include the HARQ feedback being an ACK. In another example, on condition that the determined TBS is greater than (or equal to) the TBS threshold, or the HARQ feedback is a NACK, or the DRB does not support SDT, the WTRU may transmit an RRC connection request (e.g., using a legacy RA procedure). In some cases, the WTRU may determine an UL time alignment, and on condition that the WTRU is not UL time aligned, the WTRU may transmit an RRC connection request.

Still referring to FIG. 2, if any of the conditions mentioned above and/or in FIG. 2 is not satisfied, the WTRU may initiate transition to Connected mode, and/or send an RRC Connection Request (e.g., initiating a legacy RA procedure). On the other hand, if one or more (or all) conditions mentioned above and/or in FIG. 2 are satisfied, the WTRU may stay in Inactive Mode and may continue to receive DL SDT (or transmit UL SDT), and/or send HARQ feedback on UL CG(s) for SDT (e.g., as UCI on PUSCH or PUCCH).

In one embodiment, a method implemented by a WTRU for wireless communications may include receiving configuration information for small data transmission (SDT), and the configuration information indicating one or more UL configured grants (CGs), one or more DL CGs, and a TBS threshold for SDT. The method may include receiving a DL data transmission using a DL CG of the one or more DL CGs, and determining a TBS, a hybrid automatic repeat request (HARQ) feedback, and a Data Radio Bearer (DRB) associated with the received DL data transmission. The method may also include transmitting, using an UL CG of the one or more UL CGs, the HARQ feedback associated with the received DL data transmission, based on a determination that 1) the TBS associated with the received DL data transmission is less than the TBS threshold and 2) the DRB associated with the received DL data transmission supports SDT.

In an example, the HARQ feedback is transmitted further based on a determination that the HARQ feedback is an acknowledgement (ACK) for the received DL data transmission. In an example, the method may also include transmitting an RRC connection request based on a determination that: the TBS associated with the received DL data transmission is greater than or equal to the TBS threshold, the HARQ feedback is a negative acknowledgement (NACK), and/or the DRB associated with the received DL data transmission does not support SDT. In an example, the method may further include determining an UL time alignment, and transmitting an RRC connection request based on a determination that, using the determined UL time alignment, the WTRU is not UL time aligned. In an example, each of the one or more UL CGs is associated with a physical uplink shared channel (PUSCH) resource for UL SDT. In an example, the HARQ feedback is transmitted as uplink control information (UCI) on a physical uplink shared channel (PUSCH) or a physical uplink control channel (PUCCH). In an example, the configuration information for SDT is received in an Inactive mode or a Connected mode.

In one embodiment, a method implemented by a WTRU for wireless communications may include monitoring a physical downlink control channel (PDCCH) for reception of one of a DL assignment and a control signaling after UL small data transmission; triggering a DL small data transfer procedure upon receiving a trigger signal from a network entity (e.g., a base station, or a gNB); monitoring a subset of DL configured grants (CGs) for DL assignments based on at least one of an Reference Signal Received Power (RSRP), Transport Block Size (TBS), and TA; initiating an RA to transition into a connected mode based on at least one of a subsequent DL data reception, a small data reception comprising a negative acknowledgement (NACK), and a TBS greater than or equal to a threshold; and initiating a PDCCH monitoring timer for retransmission after at least one of a small data reception and a NACK.

In an example, the PDCCH is monitored on at least one of a specific resource and a Radio Network Identifier (RNTI). The PDCCH may be monitored based on a prior UL small data transmission. In an example, the PDCCH is monitored based on at least one of a physical random-access channel (PRACH) resource, a physical uplink shared channel (PUSCH) resource, and a UL small data protocol data unit (PDU) content. In an example, the DL small data transfer procedure comprises an RA for small data. In an example, the triggers may comprise one or more of a PRACH, a Physical Downlink Shared Channel (PDSCH), and/or an RA type.

In various embodiments, HARQ feedback for downlink small data transmitted as part of messages of a RA procedure can be implicit or explicit. For example, the WTRU may implicitly indicate a HARQ-ACK for small data received in Msg2 by transmission of Msg3 or by including an indication part of the Msg3 payload (e.g., UCI on PUSCH). For small data received on MsgB or Msg4 or a DL CG, the WTRU may provide HARQ-ACK by explicit signaling (e.g., UCI on PUSCH or PUCCH).

The WTRU may or may not be uplink time synchronized to provide HARQ-ACK feedback on PUCCH or PUSCH. The WTRU may by predefined or configured (e.g., by broadcast or semi-static signaling) with HARQ feedback parameters (e.g., feedback timing, K1, feedback resource such as PRI, uplink carrier, etc.) possibly per cell, per DL CG, and/or per RA type (small data received in 2-step vs. 4-step RA). The WTRU may determine feedback parameters from dynamic explicit signaling/indication part of PDCCH signaling, part of MsgB/Msg2/Msg4 contents, or part of contents of the downlink small data PDU itself. The WTRU may determine feedback parameters implicitly from the DL resources used to transmit downlink data.

The WTRU may be further provided with a dynamic uplink grant for transmission of HARQ feedback as UCI on PUSCH, along with possible associated uplink small data. The WTRU may override semi-static or predefined feedback parameters upon being provided the dynamic uplink grant for transmission of HARQ feedback as UCI on PUSCH, along with possible associated uplink small data.

A WTRU may monitor for PDCCH signaling or for a downlink assignment or monitor for DL assignments on certain DL resource (e.g., PDSCH resource, SPS) upon determining NACK or providing HARQ feedback as NACK for one or more TBs.

The WTRU may start a timer during which the WTRU monitors the PDCCH as described thereof, e.g., after transmitting NACK feedback or after reception of the DL TB. The timer value may be configured by broadcast or semi-static signaling. Upon expiry of the timer, the WTRU may stop monitoring PDCCH for a retransmission.

Procedural aspects of small data reception such as a DL small data format is disclosed herein. A WTRU may receive one or more types of contents in a small data PDU/subPDU/MAC CE. The one or more contents may include data from one or more LCH, resumelD (e.g., to enable the network to move a WTRU to connected mode), and/or an I-RNTI or a C-RNTI.

The one or more contents may include an indication on whether there is subsequent data. For example, the WTRU may receive a bit indication if the WTRU should monitor for subsequent DL assignment(s) for reception of subsequent small data. The indication may further indicate an associated DL resource for subsequent data reception.

The one or more contents may include an indication on whether to transition to connected mode, e.g., for reception of further data, HARQ feedback parameters/resource (PRI, HARQ feedback timing (K1), HARQ process ID(s) for which the WTRU provides feedback), reception confirmation/HARQ-ACK of related prior UL small data for one or more HARQ PIDs, and/or WTRU context information or configuration, including configuration of radio bearers, logical channels and/or security info/keys.

The WTRU may be configured by RRC or broadcast signaling with PRACH and PDSCH resources applicable for small data reception, configured grant applicable for small data reception in power saving states, whether HARQ feedback is used, possibly configured per resource (or per CG, or per PRACH, or per DL small data reception method), and/or small data applicability per downlink LCH/DRB/LCG/QoS flow configuration.

Additionally, some DRBs may suspended in inactive or idle mode. RRC may configure the WTRU per DRB with whether the DRB is maintained or suspended in idle and/or inactive mode.

In various embodiments, a WTRU may be configured to perform spatial filter maintenance in an INACTIVE mode. For example, the WTRU may perform beam alignment and maintenance, detecting beam failure, procedures for recovery, and/or fallback.

In CONNECTED state/mode, a WTRU and/or a gNB may maintain spatial filter pairs through monitoring the signal quality of reference signals. Spatial filter monitoring can be done through SSB or CSI-RS. Typically, SSBs are used for broad cell coverage, and the WTRU may use them for coarse pairing while more refined selection can be done on CSI-RS. However, when the WTRU is in INACTIVE state, the WTRU may not monitor CSI-RS. Moreover, when using a configured grant in INACTIVE state, the WTRU may be configured with a spatial filer for the transmission. However, the WTRU may be unaware of the status of the spatial filter (e.g., whether the spatial filter is still the best one to use) because the WTRU may not be monitoring spatial filter quality closely in INACTIVE state.

For a RACH procedure initiated in an IDLE or INACTIVE state, the WTRU may indicate to the gNB the best beam (e.g., the SSB with the highest measured RSRP) from a selection of the PRACH resource(s) (e.g., the RO and/or the preamble). The gNB in turn may use this information to select its receive spatial filter for Msg3 and its transmission beam for Msg2/MsgB/Msg4. However, with small data transmission in inactive state on a configured grant, there may not be a beam alignment procedure in place. The WTRU could have moved since the completion of the RACH procedure or some time might have passed since the completion of the RACH procedure, which does not provide means for the gNB to select an appropriate spatial filter to receive UL small data transmitted on a configured grant in INACTIVE state.

In various embodiments, a WTRU may be configured with spatial filter diversity in an INACTIVE state/mode. For example, a WTRU may monitor spatial filter quality on a subset of RS, and the subset of RS may be configured for INACTIVE mode only. In an example, the WTRU may be configured with multiple RSs for spatial filter monitoring, and a subset of the RSs for INACTIVE mode spatial filter monitoring. When the WTRU transitions to INACTIVE, the WTRU may determine to only monitor on the subset of RSs for INACTIVE for receiving DL data, or to transmit only with spatial filters which may be received at the gNB on the subset of RSs for INACTIVE. In some cases, the parameter(s) for detecting beam failure may be specific to INACTIVE state (e.g., the RSRP threshold or BFR RACH configuration) compared to CONNECTED state. The WTRU may use the parameter(s) for INACTIVE when the WTRU goes/transitions to INACTIVE state.

In various embodiments, to improve likelihood of successful reception (or transmission), a WTRU in INACTIVE state may determine to monitor for DL data (or transmit UL data) on more than one spatial filter, and the spatial filters may be part of a subset of RSs configured for INACTIVE use only.

In one embodiment, the WTRU may determine the spatial filter configuration based on signal quality. The WTRU may use measurements made in INACTIVE state on RSs (e.g., SSB-RSRP) to determine the number of spatial filters to transmit. For example, based on one or more SSB-RSRP measurements that is/are below a threshold, the WTRU may determine to send two UL data copies where the WTRU may use/apply two different spatial filters. If the WTRU determines an SSB-RSRP measurement above the threshold, the WTRU may use one UL data copy with one spatial filter.

In one embodiment, the WTRU may use the SSB-RSRP threshold to determine the number of RSs to monitor in INACTIVE state. For example, if the measured SSB-RSRP is below a threshold, the WTRU may monitor two RSs, whereas above a threshold the WTRU may monitor one RS. When the WTRU is in INACTIVE state, the gNB may use the subset of RSs configured for INACTIVE to send DL data or monitor the UL transmissions from the WTRU.

In another embodiment, the WTRU may use a timer to determine a spatial filter configuration. The WTRU may determine, for example, how long the WTRU has been in INACTIVE state, and the timer may map to a spatial filter configuration. In an example, for the duration of a timer, the WTRU may determine to use RS₁ for determining the spatial filters for UL transmission or for DL monitoring. The WTRU may use multiple timers where each timer may determine the number (1 or 2), an RS index (RS₁ or RS₂), and/or the pattern of spatial filters with number of repetitions (RS₁-RS₂ or RS₂-RS₁). In some cases, a timer may start when another timer expires, so the WTRU may start by monitoring RS₁ and if the WTRU fails to receive RS₁ when the timer expires, the WTRU may start another timer within which the WTRU may monitor for RS₁ and RS₂.

In various embodiments, the WTRU may be configured to perform beam failure detection in INACTIVE state/mode. In one embodiment, a WTRU in INACTIVE state may determine beam failure based on one or more conditions including signal quality and/or others. The WTRU may check for a separate condition and may use it as an estimate of the WTRU's beam status. The WTRU may use a timer, a counter, or a combination of these measured (or determined) parameters (that may (or may not) be related to beam quality) to determine that beam failure occurs. For example, one or more conditions to trigger beam failure(s) may comprise one or a combination of the following conditions as determined by the WTRU (e.g., during INACTIVE state/mode).

In an example, a timer may be used as a condition or a trigger (e.g., determined by the WTRU). Using the timer, the WTRU may keep track of the time since an event last happened, such as last time the WTRU sent a CSI report, since the WTRU became INACTIVE, since last time the WTRU was in CONNECTED, and/or since last time the WTRU sent/received data. In another example, a counter may be used as a condition or a trigger (e.g., determined by the WTRU). Using the counter, the WTRU may keep track of the number of failed attempts to send UL data, number of different spatial filters the WTRU tried to use within a time period, the number of times the WTRU sent a preamble, and/or the number of times the WTRU switched between CG and RACH or between 2-step RACH and 4-step RACH. In an example, a power level may be used as a condition or a trigger (e.g., determined by the WTRU). For example, the WTRU may determine that the power level (e.g., a transmit power level or a receive power level) is above (or below) a threshold. Based on the determination that the power level being above (or below) a threshold, the WTRU may determine that its spatial filter is no longer valid based on achieving a determined transmit power level. The determined transmit power level may be based on a threshold, the WTRU's P_{cmax}, and/or a power headroom.

In various embodiments, the WTRU may be configured to perform beam failure recovery in INACTIVE state/mode. In one embodiment, upon detection of beam failure in INACTIVE mode, the WTRU may perform one or more of the following recovery activities: (1) the WTRU may transition to connected mode. (2) The WTRU may perform cell reselection. (3) The WTRU may fall back on a different method of small data transmission. For example, if the WTRU is configured to perform small data transmission on a configured grant, the WTRU may instead attempt to transmit small data on a RACH-based resource (e.g., MsgA or Msg3). (4) The WTRU may select a different CG. For example, the WTRU may select a CG with a more conservative MCS. The WTRU may select an alternative CG, for example, only if the WTRU has/uses a more conservative MCS, only once, or until there are no remaining CGs configured for the WTRU. (5) The WTRU may select a different spatial filter. For example, the WTRU may perform retransmission on an alternative spatial filter. The WTRU may have a fallback spatial filter configured, or the WTRU may pick a candidate spatial filter at random. The WTRU may be configured with a finite number of attempts to select a different spatial filter, wherein upon reaching the configured value it will perform an alternative recovery action, or transition to IDLE. And/or (6) The WTRU may perform RACH with a subset of resources/RNTIs configured for beam failure recovery. Such resource may be pre-configured by the gNB, and indicated to the WTRU, where the WTRU may attempt to access, for example, a subset of RACH preambles dedicated for beam failure recovery, and/or performing CFRA with a dedicated RNTI.

In one embodiment, the WTRU may perform beam failure recovery actions upon explicit indication from the gNB. For example, the WTRU may receive an explicit indication from the gNB to perform one or more of the recovery actions listed above. This indication may be, for example: (1) upon receiving one or more NACK(s) or retransmission grant(s). The WTRU may, for example, perform the above actions upon receiving one or more NACK(s) or retransmission grant(s) from the gNB. In one embodiment, the WTRU may be configured with a counter upon which after receiving a certain number of NACK/retransmission grants will perform one or more of the above recovery actions. Alternatively, the WTRU may be configured with a timer wherein if the WTRU has not received an ACK it will perform one or more of the above recovery actions; and/or (2) upon receiving an RRC Release message.

In various embodiments, the WTRU may be configured to perform beam failure reporting in INACTIVE state/mode. In one embodiment, upon beam failure detection, the WTRU may report the beam failure to the gNB. In an example, the WTRU may be configured with a dedicated subset of PRACH resources. Upon beam failure detection, the WTRU may initiate RACH using one of the dedicated beam failure preambles. In another example, the WTRU may transmit a BFR MAC CE in msg3/MsgA. A set of PRACH resources may be configured for INACTIVE beam failure recovery. The WTRU may trigger the INACTIVE BFR using the PRACH resources, and the gNB may detect that an INACTIVE BFR is triggered. The gNB may determine to keep the WTRU in INACTIVE after the WTRU determines its new spatial filter.

In various embodiments, the WTRU may be configured to perform beam alignment and maintenance for small data CG transmission(s). In an example, the WTRU may perform a beam establishment procedure prior to transmitting on the CG PUSCH resource. In one embodiment, the WTRU may measure the available SSB(s) and/or CSI-RS(s) prior to transmitting small data on a PUSCH resource in idle or inactive state.

In one embodiment, the WTRU may select and report the best (or preferred) beam(s) (e.g., SSB(s), and/or CSI-RS(s)) by performing a beam training preamble transmission or a beam training PUCCH transmission on a resource associated with the selected beam(s), SSB(s), and/or CSI-RS(s). The association between the PRACH resource and beam(s), SSB(s), and/or CSI-RS(s) can be configured by higher layers (e.g. maintained part of the WTRU context) or delivered by broadcast signaling. For example, the WTRU may transmit a beam training preamble on a PRACH resource (e.g. preamble and/or RO) to indicate the best or preferred beam then follow that transmission with a small data transmission on PUSCH CG resource. The gap between the preamble transmission and the PUSCH transmission can be configured, predetermined, or provide by broadcast signaling. The beam training preamble can be beneficial for the receiver to determine the best receive beam to use for reception of the following PUSCH transmission. The WTRU may not need to continue with a RACH procedure following the transmission of such training preamble, i.e. the WTRU may (or may not) monitor the PDCCH for the reception of a RAR. The WTRU may monitor the PDCCH for a gNB response following the transmission of a beam training preamble or a beam training PUCCH; the WTRU may transmit small data on PUSCH resource after successful reception of such gNB response. The WTRU may be configured by dedicated signaling with dedicated beam training PRACH and/or PUCCH resources. The WTRU may use the common PRACH otherwise to transmit a beam training preamble.

In one embodiment, the WTRU may select and report the best (or preferred) beam(s) (e.g., SSB(s), and/or CSI-RS(s)) in a MAC CE (e.g., a beam training MAC CE or a BFR MAC CE). The WTRU may selectively include such MAC CE after a configured or predetermined number of (re)-transmissions or upon receiving an indication from the gNB to perform such action(s).

The WTRU may selectively perform such beam training procedure prior to a subset of CG occasions, for example, if a configured period of time has elapsed or after a number of (re)-transmissions. For example, the WTRU may start a beam maintenance timer after each beam training procedure. The WTRU may perform the beam training procedure if such beam maintenance timer has expired. The WTRU may start the beam maintenance timer after transmission of a beam training preamble, any preamble, a beam training PUCCH, a beam training related MAC CE, and/or after successful completion of a RACH procedure. In another example, the WTRU may perform such beam training procedure after a certain number of (re)-transmissions, e.g. possibly on the CG resource. In one embodiment, the WTRU may perform such beam training procedure periodically, e.g., once every configured period of time.

In various embodiments, the WTRU may be configured to perform proactive RACH procedure for beam alignment. In one embodiment, a beam training preamble may be part of a newly initiated RACH procedure. Such procedure may be initiated periodically or triggered by an event and may (or may not) be tied to the timing of the CG transmission. The WTRU may measure SSB(s) and/or CSI-RS(s) and/or trigger a new RACH procedure for beam training. For example, the WTRU may measure one or more SSBs, and/or measure one or more CSI-RSs, and/or trigger a new RACH procedure for beam training, if one or more following conditions are satisfied: 1) the WTRU measured a new SSB or CSI-RS that has a RSRP above a configured threshold; 2) the reported preferred beam has changed; 3) a new SSB or CSI-RS has a higher RSRP than a previously reported beam; 4) a period of time has elapsed, and/or a number of small data (re)-transmissions have occurred; 5) a timing advance timer has expired (e.g. the TA timer associated with the CG resource); 6) the WTRU has received a DL indication (by DCI or MAC CE) to change beams or TCI states; 7) the WTRU has moved (e.g. the WTRU's estimated position has changed or speed is above a threshold), or the WTRU has a new serving cell, and/or the WTRU has a new serving TRP; and/or 8) a configured timer (e.g., a beam maintenance timer) has expired.

In various embodiments, the WTRU may fallback to retransmit a small data payload on a RACH resources applicable for small data, for example, after a configured or predetermined number of (re)-transmissions, expiry of a timer (e.g., the beam maintenance timer). The WTRU may segment the stored TB if the TBS of the RACH resource does not match the TBS and may include an indication for subsequent transmission. Alternatively, the WTRU may use the RACH procedure for beam realignment (without retransmitting the stored small data payload) then retransmit the small data payload on the CG after the successful completion of the RACH procedure.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the representative embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (e.g., but not always, in that in certain contexts the choice between hardware and software may become significant) a design choice representing cost vs. efficiency tradeoffs. There may be various vehicles by which processes and/or systems and/or other technologies described herein may be affected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

It is also to be understood that the terminology used herein is for the purpose of describing particular embodiments only, and is not intended to be limiting. As used herein, when referred to herein, the terms "station" and its abbreviation "STA", "user equipment" and its abbreviation "UE" may mean (i) a wireless transmit and/or receive unit (WTRU), such as described infra; (ii) any of a number of embodiments of a WTRU, such as described infra; (iii) a wireless-capable and/or wired-capable (e.g., tetherable) device configured with, inter alia, some or all structures and functionality of a WTRU, such as described infra; (iii) a wireless-capable and/or wired-capable device configured with less than all structures and functionality of a WTRU, such as described infra; or (iv) the like. Details of an example WTRU, which may be representative of (or interchangeable with) any UE recited herein, are provided below with respect to FIGS. 1A-1D.

In certain representative embodiments, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" or "group" is intended to include any number of items, including zero. Additionally, as used herein, the term "number" is intended to include any number, including zero.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

A processor in association with software may be used to implement a radio frequency transceiver for use in a wireless transmit receive unit (WTRU), user equipment (UE), terminal, base station, Mobility Management Entity (MME) or Evolved Packet Core (EPC), or any host computer. The WTRU may be used m conjunction with modules, implemented in hardware and/or software including a Software Defined Radio (SDR), and other components such as a camera, a video camera module, a videophone, a speakerphone, a vibration device, a speaker, a microphone, a television transceiver, a hands free headset, a keyboard, a Bluetooth^{®} module, a frequency modulated (FM) radio unit, a Near Field Communication (NFC) Module, a liquid crystal display (LCD) display unit, an organic light-emitting diode (OLED) display unit, a digital music player, a media player, a video game player module, an Internet browser, and/or any Wireless Local Area Network (WLAN) or Ultra Wide Band (UWB) module.

Although the invention has been described in terms of communication systems, it is contemplated that the systems may be implemented in software on microprocessors/general purpose computers (not shown). In certain embodiments, one or more of the functions of the various components may be implemented in software that controls a general-purpose computer.

In addition, although the invention is illustrated and described herein with reference to specific embodiments, the invention is not intended to be limited to the details shown. Rather, various modifications may be made in the details within the scope and range of equivalents of the claims and without departing from the invention.

Throughout the disclosure, one of skill understands that certain representative embodiments may be used in the alternative or in combination with other representative embodiments.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory

(ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WRTU, UE, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits.

The data bits may also be maintained on a computer readable medium including magnetic disks, optical disks, and any other volatile (e.g., Random Access Memory ("RAM")) or non-volatile ("e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

Although the invention has been described in terms of communication systems, it is contemplated that the systems may be implemented in software on microprocessors/general purpose computers (not shown). In certain embodiments, one or more of the functions of the various components may be implemented in software that controls a general-purpose computer.

In addition, although the invention is illustrated and described herein with reference to specific embodiments, the invention is not intended to be limited to the details shown. Rather, various modifications may be made in the details within the scope and range of equivalents of the claims and without departing from the invention.

### ITEMS

1. A method implemented by a wireless transmit/receive unit (WTRU) for wireless communications, the method comprising:
   receiving configuration information for small data transmission (SDT), wherein the configuration information indicating one or more uplink (UL) configured grants (CGs), one or more downlink (DL) CGs, and a Transport Block Size (TBS) threshold for SDT;
   receiving a DL data transmission using a DL CG of the one or more DL CGs;
   determining a TBS, a hybrid automatic repeat request (HARQ) feedback, and a Data Radio Bearer (DRB) associated with the received DL data transmission; and
   transmitting, using an UL CG of the one or more UL CGs, the HARQ feedback associated with the received DL data transmission, based on a determination that 1) the TBS associated with the received DL data transmission is less than the TBS threshold and 2) the DRB associated with the received DL data transmission supports SDT.
2. The method of item 1, wherein the HARQ feedback is transmitted further based on a determination that the HARQ feedback is an acknowledgement (ACK) for the received DL data transmission.
   item
3. The method of item 1, further comprising transmitting a Radio Resource Control (RRC) connection request based on a determination that:
   1) the TBS associated with the received DL data transmission is greater than or equal to the TBS threshold,
   2) the HARQ feedback is a negative acknowledgement (NACK), and/or
   3) the DRB associated with the received DL data transmission does not support SDT.
      item
4. The method of item 1, further comprising:
   determining an UL time alignment; and
   transmitting a Radio Resource Control (RRC) connection request based on a determination that, using the determined UL time alignment, the WTRU is not UL time aligned.
      item
5. The method of item 1, wherein each of the one or more UL CGs is associated with a physical uplink shared channel (PUSCH) resource for UL SDT.
6. The method of item 1, wherein the HARQ feedback is transmitted as uplink control information (UCI) on a physical uplink shared channel (PUSCH) or a physical uplink control channel (PUCCH).
7. The method of item 1, wherein the configuration information for SDT is received in an Inactive mode or a Connected mode.
8. The method of any preceding claims, further comprising:
   monitoring a physical downlink control channel (PDCCH) for reception of one of a DL assignment and a control signaling after an UL SDT;
   triggering a DL small data transfer procedure upon receiving a trigger signal;
   monitoring a subset of the one or more DL CGs for DL assignments based on any of: a Reference Signal Received Power (RSRP), the TBS, or an UL time alignment;
   initiating a random access (RA) to transition into a connected mode based on any of: a subsequent DL data reception, a small data reception comprising a negative acknowledgement (NACK), or the TBS being greater than or equal to the TBS threshold; and
   initiating a PDCCH monitoring timer for retransmission after at least a small data reception comprising a NACK.
      item
9. The method of item 8, wherein the PDCCH is monitored on any of: a specific resource, or a Radio Network Identifier (RNTI).
10. The method of item 8, wherein the PDCCH is monitored based on a prior UL small data transmission.
11. The method of item 8, wherein the PDCCH is monitored based on any of: a physical random-access channel (PRACH) resource, a physical uplink shared channel (PUSCH) resource, or a UL small data protocol data unit (PDU) content.
12. The method of item 8, wherein the DL small data transfer procedure comprises an RA for small data.
13. The method of item 8, wherein the triggering comprises one of a PRACH, a Physical Downlink Shared Channel (PDSCH), and an RA type.
14. A wireless transmit/receive unit (WTRU) for wireless communications, the WTRU comprising:
   a receiver configured to receive:
      configuration information for small data transmission (SDT), wherein the configuration information indicating one or more uplink (UL) configured grants (CGs), one or more downlink (DL) CGs, and a Transport Block Size (TBS) threshold for SDT; and
      a DL data transmission using a DL CG of the one or more DL CGs; and
   a processor configured to determine a TBS, a hybrid automatic repeat request (HARQ) feedback, and a Data Radio Bearer (DRB) associated with the received DL data transmission; and
   a transmitter configured to transmit, using an UL CG of the one or more UL CGs, the HARQ feedback associated with the received DL data transmission, based on a determination that 1) the TBS associated with the received DL data transmission is less than the TBS threshold and 2) the DRB associated with the received DL data transmission supports SDT.
15. The WTRU of item 14, wherein the HARQ feedback is transmitted further based on a determination that the HARQ feedback is an acknowledgement (ACK) for the received DL data transmission.
16. The WTRU of item 14, wherein the transmitter is configured to transmit a Radio Resource Control (RRC) connection request based on a determination that:
   1) the TBS associated with the received DL data transmission is greater than or equal to the TBS threshold,
   2) the HARQ feedback is a negative acknowledgement (NACK), and/or
   3) the DRB associated with the received DL data transmission does not support SDT.
17. The WTRU of item 14, wherein
   the processor is configured to determine an UL time alignment, and
   the transmitter is configured to transmit a Radio Resource Control (RRC) connection request based on a determination that, using the determined UL time alignment, the WTRU is not UL time aligned.
18. The WTRU of item 14, wherein each of the one or more UL CGs is associated with a physical uplink shared channel (PUSCH) resource for UL SDT.
19. The WTRU of item 14, wherein the HARQ feedback is transmitted as uplink control information (UCI) on a physical uplink shared channel (PUSCH) or a physical uplink control channel (PUCCH).
20. The WTRU of item 14, wherein the configuration information for SDT is received in an Inactive mode or a Connected mode.

## Claims

1. A method implemented by a wireless transmit/receive unit, WTRU, for wireless communications, the method comprising:
receiving, via radio resource control, RRC, signaling, configuration information for small data transmission, SDT, including one or more data radio bearers, DRBs, supporting SDT;
receiving a paging message including indication information for downlink, DL, SDT and including an I-radio network temporary identifier, I-RNTI, for the WTRU;
determining to transmit an uplink, UL, transmission based on at least reception of the paging message including the indication information for DL SDT and including the I-RNTI for the WTRU;
determining that the WTRU is not UL time synchronized;
transmitting a preamble transmission based on the determination that the WTRU is not uplink time synchronized;
transmitting the UL transmission, on one or more physical uplink shared channel, PUSCH, resources based on the determination to transmit the UL transmission;
after transmitting the UL transmission, monitoring a physical downlink control channel, PDCCH, for reception of a DL assignment;
receiving the DL assignment; and
receiving, based on the DL assignment, a DL data transmission using a DRB of the one or more DRBs supporting SDT.

2. A wireless transmit/receive unit, WTRU, for wireless communications, the WTRU comprising:
a receiver configured to receive:
via radio resource control, RRC, signaling, configuration information for small data transmission, SDT, including one or more data radio bearers, DRBs, supporting SDT;
a paging message including indication information for downlink, DL, SDT, and including an I-radio network temporary identifier, I-RNTI, for the WTRU,
a processor, operatively coupled to the receiver, configured to determine:
to transmit an uplink, UL, transmission based on at least reception of the paging message including the indication information for DL SDT and including the I-RNTI for the WTRU;
that the WTRU is not UL time synchronized;
a transmitter, operatively coupled to the receiver and the processor, configured to transmit the UL transmission, on one or more physical uplink shared channel, PUSCH, resources, based on the determination to transmit the UL transmission;
the processor and the receiver configured to monitor, after the transmission of the UL transmission, a physical downlink control channel, PDCCH, for reception of a DL assignment;
the receiver configured to receive:
the DL assignment; and
based on the DL assignment, a DL data transmission using a DRB of the one or more DRBs supporting SDT.

3. The method of claim 1 or the WTRU of claim 2, wherein the configuration information indicates one or more UL configured grants, CGs, for SDT and one or more DL CGs for SDT, wherein the DL data transmission is received further using a DL CG of the one or more DL CGs.

4. The method of claim 3, further comprising:
transmitting, using an UL CG of the one or more UL CGs, hybrid automatic repeat request, HARQ, feedback associated with the DL data transmission, based on the DRB of the one or more DRBs supporting SDT, wherein the DRB of the one or more DRBs supporting SDT is associated with the DL data transmission, and wherein the HARQ feedback is transmitted using the UL CG further based on the HARQ feedback being an acknowledgement, ACK, for the DL data transmission.

5. The WTRU of claim 3, further comprising:
means configured to transmit, using a UL CG of the one or more UL CGs, hybrid automatic repeat request, HARQ, feedback associated with the DL data transmission, based on the DRB of the one or more DRBs supporting SDT, wherein the DRB of the one or more DRBs supporting SDT is associated with the DL data transmission; and wherein the HARQ feedback is transmitted using the UL CG further based on the HARQ feedback being an acknowledgement, ACK, for the DL data transmission.

6. The method of claim 4, further comprising transmitting, or the WTRU of claim 5, further comprising means configured to transmit:
an RRC connection request based on: a transport block size, TBS, associated with the DL data transmission being greater than or equal to a configured TBS threshold for SDT, and the HARQ feedback associated with the DL data transmission being a negative acknowledgement, NACK.

7. The method or the WTRU of claim 3, wherein each of the one or more UL CGs is associated with a PUSCH resource for UL SDT.

8. The method of claim 4 or the WTRU of claim 5, wherein the HARQ feedback is transmitted as uplink control information, UCI, on a PUSCH or a physical uplink control channel, PUCCH.

9. The method of claim 4 or the WTRU of claim 5, further comprising:
monitoring a physical downlink control channel, PDCCH, for reception of one of the DL assignment and a control signaling after an UL SDT;
triggering a DL small data transfer procedure upon receiving a trigger signal;
monitoring a subset of the one or more DL CGs for DL assignments based on any of: a Reference Signal Received Power, RSRP, a transport block size, TBS, or a UL time alignment;
initiating a random access, RA, to transition into a connected mode based on any of: a subsequent DL data reception, a small data reception comprising a negative acknowledgement, NACK, or the TBS being greater than or equal to a TBS threshold; and
initiating a PDCCH monitoring timer for retransmission after at least a small data reception comprising a NACK.

10. The method or the WTRU of claim 9, wherein the PDCCH is monitored based on a prior UL small data transmission.

11. The method or the WTRU of claim 9, wherein the PDCCH is monitored based on any of: a physical random-access channel, PRACH, resource, a PUSCH resource, or a UL small data protocol data unit, PDU, content.

12. The method of claim 4 or the WTRU of claim 5, wherein the configuration information indicates a transport block size, TBS, threshold for SDT, and wherein the HARQ feedback is transmitted using the UL CG further based on a TBS associated with the DL data transmission being less than the TBS threshold.

13. The method claim 4 or the WTRU of claim 5, wherein the HARQ feedback is transmitted using the UL CG further based on UL transmission time for the WTRU being synchronized.

14. The method of claim 1, further comprising transmitting, or the WTRU of claim 2 further comprising means configured to transmit:
an RRC connection request based on the determination that the WTRU is not UL time synchronized.

15. The method of claim 1 or the WTRU of claim 2, wherein the configuration information for SDT is received in an Inactive mode or a Connected mode.
